# EUROPEAN PATENT SPECIFICATION

(11) **EP 1 828 721 B1**
(45) Date of publication and mention of the grant of the patent: **28.04.2010**
(21) Application number: 05813311.7
(22) Date of filing: 01.12.2005
(51) Int. Cl.: G01D 5/20, B60K 17/02, F16D 25/12, G01D 11/30

(54) **A HOLDER FOR A SENSOR BODY FOR A POSITION SENSOR**
HALTEVORRICHTUNG FÜR EINEN SENSORKÖRPER FÜR EINEN POSITIONSSENSOR
ELEMENT DE RETENUE POUR UN CORPS DE CAPTEUR DE POSITION

(30) Priority: 14.12.2004 SE 0403022
(43) Date of publication of application: 05.09.2007
(73) Proprietor: Scania CV AB (publ), 151 87 Södertälje (SE)
(72) Inventor: HAGBERG, Magnus, S-151 39 Södertälje (SE); JIEWERTZ, Sten, S-153 36 Järna (SE)
(86) International application number: PCT/SE2005/001802
(87) International publication number: WO 2006/065197

(56) References cited:
- EP-A1- 0 595 366
- WO-A-97/48578
- WO-A1-2006/006916
- DE-A1- 10 302 312
- JP-A- 10 026 664
- SE-C2- 525 792
- US-A- 3 653 021

## Description

### TECHNICAL FIELD

The invention relates to a holder for a sensor body for a position sensor, comprising a holder housing, a circular cylindrical recess with a bottom in the holder housing, a head connectable to one end of the sensor body and adapted, concentrically and by being to a limited extent tiltable from a normal position, to being accommodated and fastened in the cylindrical recess, and a compression spring between said head and bottom for flexibly preloading the head towards the normal position.

Such a holder is particularly usable for inductive position sensors where the sensor body has a shape of an elongate rod made of a soft iron alloy. In such cases it is possible for the sensor body to elastically give way without being deformed if it is subjected to mechanical action in the form of pressure and impacts, e.g. when being fitted in or removed from confined spaces in a vehicle. Above all, however, the sensor body can give way without being subject to harmful wear if for any reason it has to be situated obliquely in the duct of a cooperating sensor body in which it moves to and fro during operation.

### BACKGROUND

In such a known holder, the head is arranged with radial clearance in the recess, with the result that the sensor body may risk being permanently displaced sideways from the normal position by said action, thereby disadvantageously altering the signal characteristic, i.e. the relationship between sensor position and signal amplitude. The known sensor also uses as compression spring an O-ring, which has a relatively steep spring characteristic, thereby risking the sensor body becoming permanently deformed or being subject to harmful wear against a sensor duct wall even after a relatively small elastic giving way.

Two further ways of flexibly holding a sensor in a recess are known from documents WO 97/48578 A and DE 103 02 312 A1.

### SUMMARY OF THE INVENTION

An object of the present invention is therefore to provide a holder of the kind indicated in the introduction which overcomes the shortcomings indicated above of the state of the art. This is achieved by the features indicated in the claims set out below.

According to one version of the invention, the head has the shape of a central spherical segment with a diameter corresponding to the diameter of the recess. This means that the sensor body can perform pivoting movements about the centrepoint of the head and only move axially in the sensor duct. It is thus ensured that after relief of spring pressure the sensor body will always revert to the normal position. Moreover, the compression spring takes the form of a flat wire spring. A flat wire spring in this specification means a compression spring where the spring material is leaf-shaped with the broad sides of the leaf oriented mainly to facing towards the springing direction. Such a spring may with advantage be designed with a very flat spring characteristic which with little fitting depth allows a relatively large, gently resilient giving way of the sensor body, so that the latter does not become deformed and is not subject to wear that would be detrimental to the signal characteristic.

Furthermore, the flat wire of the spring is of the type where spring turns have an undulating shape extending in a springing direction of the spring. Such a spring may be made very short and with almost constant spring force.

Other features and advantages of the invention are indicated by the following detailed description and the claims.

### BRIEF DESCRIPTION OF THE DRAWINGS

FIG. 1 is a side view of a sensor body which may be combined with a holder according to the invention;
FIG. 2 is an oblique view from the side, partly in section and with cutaway portions, of the FIG. 1 holder;
FIG. 3 is a longitudinal sectional view, with cutaway portions, of the FIG. 1 holder with the sensor body situated obliquely;
   and
FIG. 4 is a view obliquely from above on a larger scale of a compression spring usable in a holder according to the invention.

### DETAILED DESCRIPTION OF AN EMBODIMENT

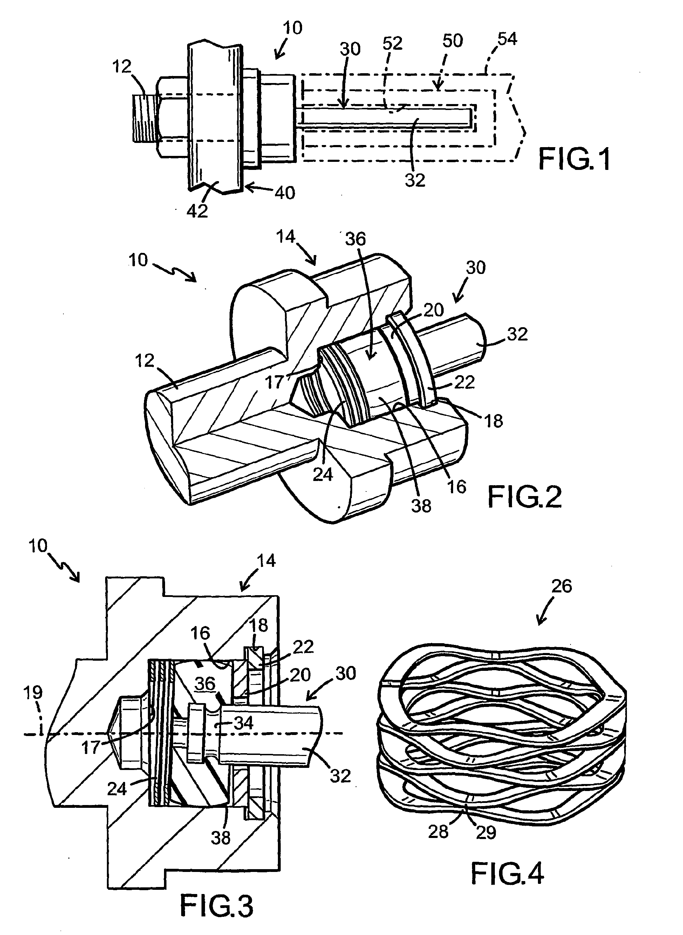

The holder 10 for the sensor body 30 in FIG. 1 is depicted only by way of example in the form of a threaded bolt 12 fitted to a schematically illustrated vehicle component 40. The vehicle component 40 may typically be a part 42 of an undepicted gearbox which may perform a linear relative movement with respect to a cooperating sensor body 50 depicted in chain-dotted lines and fitted to another part of the gearbox. The cooperating sensor body 50 has in a conventional manner a cylindrical duct 52 for accommodating a sensor rod 32 of the sensor body 30. The sensor arrangement thus constituted may in a well-known but undepicted manner signal the mutual positions of the parts 42, 54 to control equipment in order, for example, to indicate when various gears of the gearbox are in correct engagement. Many other applications are also possible, however, e.g. for indicating mutual positions between friction linings in a vehicle friction clutch (not depicted).

In the example depicted, the sensor arrangement is of inductive type and the elongate sensor rod 32 of the sensor body 30 is made of a relatively soft iron alloy, e.g. 50% Fe and 50% Ni. For maximum possible assurance that the signal characteristic from the sensor arrangement is repeatably constant, it is of great importance that the soft sensor body 32 should not become deformed or otherwise become situated obliquely or risk being subject in its movement path to harmful wear in the duct 52 of the cooperating sensor body 50.

To this end, the holder 10 is adapted to flexibly restraining the sensor body 30 from deflection (FIG. 3) from an axially oriented normal position (FIGS. 1 and 2) as follows.

The holder 10 has a holder housing 14 in which there is a drilled hole or a circular cylindrical recess 16 with a bottom 17. The recess 16 is adapted to accommodating a head 36 of one end of the sensor body 30. The head 36 is formed by injection moulding of a plastic material, particularly polyamide containing glass fibre for high abrasion resistance, on an end portion of the sensor rod 32. The sensor rod 32 further has a peripheral groove 34 for positive keying of the cast-on head 36.

As may most clearly be seen in FIG. 3, the head 36 has a shape of a central spherical segment, i.e. with the appearance of an equatorial symmetrical slice of a sphere. The spherical diameter corresponds to the diameter of the recess 16, with the result that the sensor body 30 can to a limited extent be tilted or deflected in all directions from the normal position without the spherical centrepoint of the head 36 deviating from the centreline 19 of the recess 16.

A compressive flat wire spring 24 exerts preloading between the bottom 17 of the recess 16 and a base surface of the head 36. The opposite base surface of the head 36 is urged by the preloading force of the spring 24 towards a planar apertured disc 20, which itself abuts in a planar manner against a retaining ring 22 clamped in a peripheral groove 18 of the recess 16. The apertured disc 20 serves to equalise the unevenness in the planar abutment which may be caused by the undepicted opening in the retaining ring 22 which makes it possible for the latter to be inserted in the groove 18. The disc 20 and the retaining ring 22 further have such large central holes that they neither engage with the sensor rod 32 nor hinder the intended deflection of the sensor body 30.

As indicated above, flat wire spring means a compression spring where the spring material is leaf-shaped or strip-shaped with the broad sides of the leaf oriented mainly to facing towards the springing direction. Such a spring may with advantage be made very short, i.e. require very little fitting depth, while at the same time it has a very flat spring characteristic, i.e. the spring force increases only slightly with compression over the whole working range. FIGS. 2 and 3 depict a flat wire spring 24 of conventional helical type. FIG. 4 depicts a flat wire spring 26 of helical type where the spring turns have an undulating shape extending in the springing direction and the tops 28 and bottoms 29 of the undulations abut against one another. Such a flat wire spring need not necessarily be of helical type in one piece, it may also comprise a number of layers of separate undulating spring discs (not depicted) stacked on one another and possibly bonded to one another at the respective tops and bottoms of the undulations.

## Claims

1. A holder (10) for a sensor body (30) for a position sensor, comprising a holder housing (14); a circular cylindrical recess (16) with a bottom (17) in the holder housing; a head (36) firmly connectable to one end of the sensor body (30) and adapted, by being to a limited extent tiltable from a normal position, to being accommodated and fastened in the cylindrical recess (16); whereby the head (36) has the shape of a central spherical segment with a diameter corresponding to the diameter of the recess (16) ***characterised* in that** the holder further comprises a compression spring (24; 26) between said head (36) and bottom (17) in order flexibly to preload the head towards the normal position; and that the compression spring (24; 26) is a flat wire spring, wherein the flat wire spring (26) is of the type where spring turns have an undulating shape extending in a springing direction of the spring, and where respective tops and bottoms of undulations in adjacent spring turns abut against one another.

2. A holder according to any one of the foregoing claims, whereby the head is formed on the end of the sensor body by injection moulding of a plastic material.

3. A holder according to claim 2, whereby the plastic material is polyamide containing glass fibre.

## Patentansprüche

1. Halterung (10) für einen Sensorkörper (30) für einen Positionssensor, umfassend ein Halterungsgehäuse (14); eine kreiszylindrische Ausnehmung (16) mit einem Boden (17) in dem Halterungsgehäuse; einen Kopf (36), der fest mit einem Ende des Sensorkörpers (30) verbunden und dazu ausgebildet ist, indem er bis zu einem beschränktem Umfang aus einer Ruhestellung neigbar ist, um in der zylindrischen Ausnehmung (16) aufgenommen und befestigt zu werden; wobei der Kopf (36) die Form eines mittigen kugelförmigen Abschnitts hat, mit einem Durchmesser entsprechend dem Durchmesser der Ausnehmung (16),
**dadurch gekennzeichnet, dass** die Halterung (10) weiter eine Druckfeder (24; 26) zwischen dem Kopf (36) und dem Boden (17) umfasst, um den Kopf in Richtung der Ruhestellung flexibel vorzuspannen; und dass die Druckfeder (24; 26) eine Flachdrahtfeder ist, wobei die Flachdrahtfeder (26) so ausgeführt ist, dass die Federwindungen eine wellenförmige Gestalt haben, die sich in einer federnden Richtung der Feder erstrecken, und wobei entsprechende Spitzen und Böden der Wellenformen in angrenzenden Federwindungen aneinander angrenzen.

2. Halterung nach einem der vorangehenden Ansprüche, wobei der Kopf an dem Ende des Sensorkörpers durch Spritzgießen eines Kunststoffmaterials ausgebildet ist.

3. Halterung nach Anspruch 2, wobei der Kunststoff glasfaserenthaltendes Polyamid ist.

## Revendications

1. Elément de retenue (10) destiné à un corps de détecteur (30) pour un détecteur de position, comprenant un boîtier d'élément de retenue (14), un évidement cylindrique circulaire (16) comportant un fond (17) dans le boîtier d'élément de retenue ; une tête (36) pouvant être raccordée de manière ferme à une extrémité du corps de détecteur (30) et conçue pour être logée et retenue dans l'évidement cylindrique (16) en pouvant être inclinée de manière limitée par rapport à une position normale ; moyennant quoi la tête (36) revêt la forme d'un segment sphérique central ayant un diamètre correspondant au diamètre de l'évidement (16), **caractérisé en ce que** l'élément de retenue comprend en outre un ressort de compression (24 ; 26) entre ladite tête (36) et le fond (17) de manière à précharger de manière flexible la tête vers la position normale et **en ce que** le ressort de compression (24 ; 26) est un ressort plat en fil métallique, dans lequel le ressort plat en fil métallique (26) est du type dans lequel les tours du ressort ont une forme ondulée s'étendant dans une direction de détente mécanique du ressort, et où les crêtes et les fonds respectifs des ondulations dans les tours de ressort adjacents sont aboutés les uns contre les autres.

2. Elément de retenue selon l'une quelconque des revendications précédentes, dans lequel la tête est formée au niveau de l'extrémité du corps de détecteur par moulage par injection d'une matière plastique.

3. Elément de retenue selon la revendication 2, dans lequel la matière plastique est du polyamide contenant des fibres de verre.
